# EUROPEAN PATENT SPECIFICATION

(11) **EP 2 442 582 B1**
(45) Date of publication and mention of the grant of the patent: **08.05.2013**
(21) Application number: 11181935.5
(22) Date of filing: 20.09.2011
(51) Int. Cl.: H04N 21/434, H04N 21/462, H04N 21/4425, H04N 21/643

(54) **Selection of a data stream for receiving a data service**
Auswahl eines Datenstroms zum Empfangen eines Datendienstes
Sélection de flux de données pour recevoir un service de données

(30) Priority: 15.10.2010 GB 201017501
(43) Date of publication of application: 18.04.2012
(73) Proprietor: Samsung Electronics Co., Ltd., Suwon-si, Gyeonggi-do, 443-742 (KR)
(72) Inventor: Grant, James Robert, Staines, Middlesex TW18 4QE (GB); Waller, Arthur Simon, Staines, Middlesex TW18 4QE (GB); Toller, Mark Steven, Staines, Middlesex TW18 4QE (GB); Bernard, Thomas, Staines, Middlesex TW18 4QE (GB)
(74) Representative: Davies, Robert Ean

(56) References cited:
- WO-A2-2010/024580
- FR-A1- 2 923 111
- US-A1- 2008 250 467
- "Digital Video Broadcasting (DVB); Technical Specification for DVB Services in the Home Network Phase 1", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. BROADCAS, no. V1.1.1, 1 May 2010 (2010-05-01), XP014047156,
- DVB ORGANIZATION: "IPI2860r5 SDnS Revised Structure ETSI compliant.doc", DVB, DIGITAL VIDEO BROADCASTING, C/O EBU - 17A ANCIENNE ROUTE - CH-1218 GRAND SACONNEX, GENEVA - SWITZERLAND, 27 May 2010 (2010-05-27), XP017832750,
- DVB ORGANIZATION: "docHybrid-0.6.doc", DVB, DIGITAL VIDEO BROADCASTING, C/O EBU - 17A ANCIENNE ROUTE - CH-1218 GRAND SACONNEX, GENEVA - SWITZERLAND, 23 March 2011 (2011-03-23), XP017834812,
- DVB ORGANIZATION: "tm-ipi SDnS HybridServices.pptx", DVB, DIGITAL VIDEO BROADCASTING, C/O EBU - 17A ANCIENNE ROUTE - CH-1218 GRAND SACONNEX, GENEVA - SWITZERLAND, 12 January 2011 (2011-01-12), XP017833475,

## Description

### Field of the Invention

The present invention relates generally to reception of a data service in a system comprising a broadcast channel and a data channel, and more specifically, but not exclusively, to a method and apparatus relating to reception of a data stream at a terminal capable of receiving a digital video broadcast signal using a broadcast channel and having an internet connection using a data channel.

### Background of the Invention

A terminal may be capable of receiving data services, for example video data services, by a broadcast channel such as terrestrial, satellite or cable Digital Video Broadcasting (DVB), and may also be capable of receiving data services such as Internet Protocol Television (IPTV) using a digital channel, such as an internet connection through, for example, a telecommunication service such as a fixed line or wireless link.

The data services provided by the broadcast channel and the data channel may in some cases be the same, or may differ, and in some cases one of the broadcast or data channel may offer complementary content to the other with additional features. Some data services may be offered only by the broadcast or data channels.

Typically, the terminal may be set by a user to use either the broadcast channel or the data channel, and typically the broadcast and data channels each have their own signalling information relating to the content of the data services offered.

It may thus be difficult to make a choice as to whether to select the broadcast channel or the data channel to receive a data service, as a comparison of data services offered using the broadcast channel and the data channel may not be straightforward.

Furthermore, if it is decided to switch from using the data channel to the broadcast channel, and if the broadcast channel selected has a poor signal quality or an absent signal, a poor user experience may result due to a delay caused by the process of determining that the broadcast channel is not suitable for use.

FR-A-2923,111 (Thomson) discloses a method for the selection of audio and/or video services. According to the method, there is provided an automatic selection of service based upon the quality of signal reception.

WO 2010/024580 (LG Electronics) discloses a digital broadcast receiver and method for processing broadcast service information. In particular it discloses an arrangement by which electronic program guides may be produced based on received description information.

"Digital Video Broadcasting (DVB): Technical specification for DVB services in the home network phase 1". TECHNICAL SPECIFICATIONS, EUROPEAN TELECOMMUNICATIONS STANDARDS INSTITUTE (ETSI), 650, ROUTE DES LUCIOLES ; F-06921 SOPHIA ANTIPOLIS; FRANCE, vol. BROADCAS, no. V1.1.1. 1 May 2010 (2010-05-01), XP014047156 relates to standards for the distribution of DVB services (broadband and broadcast) over a home network to and between DVB devices in a single home which are terminated at specific DVB Home Network devices connected to the home network that subsequently advertise and transport DVB content over the home network to other DVB Home Network devices.

US 2008/0250467 (Samsung Electronics) discloses a method of processing broadcasting service information and a hybrid TV system. In this arrangement it is determined whether one or more broadcasting providers concurrently provide IPTV broadcasting services in one-to-one correspondence with legacy broadcasting services, which are substitutable for each other.

It is an object of the invention to mitigate the problems with the prior art systems.

### Summary of the Invention

In accordance with a first aspect of the present invention, there is provided a method of receiving a data service in a system comprising a broadcast channel and a data channel, in which said data service comprises at least one video data service and at least part of the video data service is transmitted as part of a first data stream by at least the broadcast channel, the method comprising:
receiving a second data stream using the data channel, said second data stream including first signalling information which relates a data service received on the data channel to an identifier of the first data stream transmitted using the broadcast channel, said identifier being used for signal identification in the broadcast channel;
receiving, using the data channel, second signalling information which defines how data within the first and second data streams are related to each other ; and
selecting one or both of the first data stream and the second data stream on the basis of the first and second signalling information, the method being characterised in that the first data stream and/or the second data stream are selectable for use in receiving the data service dependent on an indication from the second signalling information that the second data streams conveys supplementary data relating to the first data stream which identifies whether components of an IP service delivered by the data channel can be merged with components of a broadcast service from the broadcast channel.

An advantage of receiving the second signalling information is that a decision as to whether to select one or both of the first data stream and the data capable of being received using the data channel for use in receiving the data service may be made on the basis of the relationship between the first data stream and data capable of being received using the data channel, for example on whether or not they convey the same information, or for example whether one conveys additional or supplementary information to the other.

In an embodiment of the invention, the second signalling information includes an availability indicator which indicates availability of data in said data service on said broadcast channel and/or said data channel. This has an advantage that the decision as to whether to select one or both of the first data stream and the data capable of being received using the data channel for use in receiving the data service may be made on the basis of the availability of each.

In an embodiment of the invention, the availability indicator indicates whether or not the data service is only available on the broadcast channel, the method comprising:
selecting the first data stream for use in receiving the data service in dependence on the availability indicator indicating that the data service is only available on the broadcast channel. This has an advantage that it may not be necessary to attempt to receive the data service using the data channel in order to discover whether or not it is available, so that selection may involve less delay. Additional metadata may be provided over the second signalling information relating to the data service that is in addition to any that may be received over the broadcast channel.

In an embodiment of the invention, the second signalling information relates to a relationship between said first data stream and a second data stream transmitted using the data channel. This has an advantage of aiding the selection process.

In an embodiment of the invention, the method comprises:
selecting the first data stream and not the second data stream for use in receiving the data service dependent on an indication from the second signalling information that the second data stream does not convey supplementary data relating to the first data stream. This has an advantage that the use of capacity on the data service may be saved.

In an embodiment of the invention, the method comprises selecting the first data stream and the second data stream for use in receiving the data service dependent on an indication from the second signalling information that the second data streams conveys supplementary data relating to the first data stream. This has an advantage that part of the data service may be received using the broadcast channel, thus saving the use of capacity on the data channel, as the data channel need not be used to convey the part received using the broadcast channel, and may be used to receive the supplementary data.

In an embodiment of the invention, said supplementary data relates to at least one of an audio component, a data component, a subtitle component or additional video content. This has an advantage that the supplementary information, which may not be required by all users, may be omitted from a broadcast channel, saving broadcast bandwidth.

In an embodiment of the invention, the method comprises selecting the second data stream and not the first data stream for use in receiving the data service dependent on an indication from the second signalling information that the second data stream conveys at least part of the data service and in further dependence on a determination of reception quality of a broadcast signal. This has an advantage that the broadcast channel need not be selected if the broadcast quality is poor and if related content is available using the data channel.

In an embodiment of the invention, the method comprises:
selecting the second data stream for use in receiving the data service in dependence on reception quality on the broadcast channel being less than a threshold value.

In an embodiment of the invention, the determination of reception quality of a broadcast signal is on the basis of a signal strength and/or error rate measurement of a multiplex related to the first data stream.

In an embodiment of the invention, the method comprises performing the determination of signal quality prior to receiving the second signalling information. This has an advantage that the determination may be made in advance of the selection process, so that delay in the selection process is reduced.

In an embodiment of the invention, said selecting one or both of the first data stream and the data capable of being received using the data channel is performed in response to a change of selected data stream, the method comprising:
performing the determination of signal quality prior to the change of selected data stream. For example, the change in selected data stream may be a change in a television channel selected by a user. An advantage of performing the determination of signal quality prior to the change in selected data stream is that determining signal quality may be a time consuming process and this would present a delay to the user if it were performed after the change in selected data stream.

In an embodiment of the invention, the method comprises performing the determination of signal quality as part of a scan of broadcast channels dependent on availability of a tuner. This has an advantage that an existing tuner can be used to perform a scan in periods when the tuner is not used for another purpose, so that an additional tuner need not be provided.

In an embodiment of the invention, said selecting is in dependence on a time of the determination of reception quality of a broadcast signal. This has an advantage that out of date determinations may be neglected, as broadcast conditions may have changed since the determination. A maximum elapsed time may, for example, be specified since the determination for the determination to be used.

In an embodiment of the invention, the method comprises:
measuring reception quality on the data channel; and
selecting the second data stream for use in receiving the data service in dependence on reception quality on the data channel being greater than a threshold value and in dependence on a pre-determined preference for the use of the data channel rather than the broadcast channel. This has an advantage that a default preference may be set, for example, to prefer the reception of the use of the broadcast channel over the data channel, but a pre-determined preference to use the data stream received using the data channel may be set to over-ride this.

In an embodiment of the invention, the method comprises:
preparing a receiver to receive the first data stream on the broadcast channel;
monitoring reception quality on the data channel in use to receive the data service; and
switching to the use of the first data stream for use in receiving the data service in dependence on the reception quality on the data channel in use to receive the data service being less than a given value.

This has an advantage that a receiver may be pre-tuned to receive using the broadcast channel so that it may be ready to provide the data service without excessive switching delay if the data channel should deteriorate in quality.

In an embodiment of the invention, the reception quality comprises at least one of an error rate, an available bandwidth, a measure of packet jitter, and a measure of latency.

In an embodiment of the invention, the broadcast channel is provided by one of a terrestrial video broadcast system, a satellite video broadcast system and a cable broadcast system.

In an embodiment of the invention, the identifier comprises at least one of an original network identifier, a transport stream identifier and a service identifier

In an embodiment of the invention, selecting one or both of the first data stream and the data capable of being received using the data channel for use in receiving the data service is performed at a time independent of a timing of the data service. This has an advantage that the selection may be performed dynamically at any time.

In an embodiment of the invention, said identifier of the first data stream is a Digital Video Broadcast Triplet. This is a convenient method of identifying a data stream.

In an embodiment of the invention, the data channel uses Internet Protocol. The data channel may be a connection to the internet, for example. In an embodiment of the invention, the data channel comprises an Internet Protocol Television (IPTV) service.

In accordance with a second aspect of the present invention, there is provided a receiver for receiving a data service in a system comprising a broadcast channel and a data channel, in which at least part of the data service is transmitted by at least the broadcast channel, the method comprising:
receiving a second data stream using the data channel, said second data stream including first signalling information which relates a data service received on the data channel to an identifier of the first data stream transmitted using the broadcast channel, said identifier being used for signal identification in the broadcast channel;
receiving, using the data channel, second signalling information which defines how data within the first and second data streams are related to each other; and
selecting one or both of the first data stream and the second data stream on the basis of the first and second signalling information, the method being characterised in that the first data stream and/or the second data stream are selectable for use in receiving the data service dependent on an indication from the second signalling information that the second data streams conveys supplementary data relating to the first data stream which identifies whether components of an IP service delivered by the data channel can be merged with components of a broadcast service from the broadcast channel.

Further features and advantages of the invention will be apparent from the following description of preferred embodiments of the invention, which are given by way of example only.

### Brief Description of the Drawings

Figure 1 is a schematic diagram illustrating signalling of a broadcast service;
Figure 2 is a schematic diagram showing signalling according to an embodiment of the invention;
Figure 3 is a flow diagram showing update of signalling information according to an embodiment of the invention; and
Figure 4 is a flow diagram showing service selection with a broadcast channel taking priority.

### Detailed Description of the Invention

By way of example, embodiments of the invention will now be described in the context of the reception of a data service in a system comprising a terminal capable of receiving a data stream, such as a TV channel, using a broadcast channel such as may be provided by a terrestrial, satellite or cable digital video broadcast system and another data stream, such as a Internet Protocol Television (IPTV) channel, using an Internet Protocol (IP) data channel. However, it will be understood that this is by way of example only and that other embodiments may involve other broadcast channels and data channels; embodiments are not limited to a digital video broadcast channel or a internet protocol data channel.

In an embodiment of the invention, at least part of a data service is transmitted by a broadcast channel, and the terminal receives, using a data channel, first signalling information that relates the data service to an identifier of a first data stream transmitted using the broadcast channel. The identifier is an identifier that is used for signalling in the broadcast channel, such as a Digital Video Broadcast (DVB) Triplet, or an original network identifier, a transport stream identifier and a service identifier, that may be components of a DVB triplet. This ensures that signalling using the data channel uses references to data streams that are consistent with references used by signalling using the broadcast channel, to aid comparison of the data streams. The terminal also receives second signalling information relating to a relationship between the first data stream and data capable of being received using the data channel, such as a second data stream using the data channel. For example, the relationship may relate to whether the or not the broadcast channel and the data channel convey the same information, or for example whether one conveys additional or supplementary information to the other. The second signalling information may include an availability indicator which indicates availability of data in the data service on the broadcast channel and/or said data channel.

The terminal then selects one or both of the first data stream and the data capable of being received using the data channel, which may be a second data stream, for use in receiving the data service on the basis of the first and second signalling information. So, the decision as to whether to select one or both of the first data stream and the data capable of being received using the data channel for use in receiving the data service may be made on the basis of the availability of each, and the extent to which they provide similar services or additional services. For example, a basic part of a television channel service may be provided by the broadcast service, and additional features such as an audio component, possibly in a different language, a data component, a subtitle component or additional video content may be selected from the data channel, but capacity on the data channel may be saved by not downloading the parts that are duplicated on the broadcast channel. The supplementary information, which may not be required by all users, may be omitted from a broadcast channel to save broadcast bandwidth, but may be usefully provided using the data channel when required.

Although it may usually be preferred to use the broadcast channel when available to provide at least part of the data service, it is possible that a broadcast channel may experience poor signal quality, or indeed a cable may be disconnected, so that no service is available. In this case, the data stream using the data channel may be selected instead, if reception quality on the broadcast channel is less than an acceptable value. The determination of reception quality of the broadcast signal may be on the basis of a signal strength and/or error rate measurement of a multiplex related to the data stream to be received on the broadcast channel.

The determination of signal quality prior may be performed in advance of a change of selected data stream, such as a change in a television channel selected by a user. Determining signal quality, such as for example measuring a signal strength or error rate, may be a time consuming process and this would present a delay in receiving the selected television channel to the user if it were performed after the user had selected a channel change. The determination of signal quality may be performed as part of a scan of broadcast channels dependent on availability of a tuner, so that an existing tuner can be used to perform a scan in periods when the tuner is not used for another purpose. However, out of date measurements may be neglected, as broadcast conditions may have changed. A maximum elapsed time may, for example, be specified.

The reception quality on the data channel may be measured, and a data stream using the data channel may be selected for use in receiving the data service in dependence on reception quality on the data channel being greater than a threshold value, and also in dependence on a pre-determined preference for the use of the data channel rather than the broadcast channel. A default preference may be set, for example, to prefer the reception of the use of the broadcast channel over the data channel, but a pre-determined preference to use the data stream received using the data channel may be set to over-ride this, providing the data channel is of sufficient quality. A receiver may be pre-tuned to receive using the broadcast channel so that it may be ready to provide the data service without excessive switching delay if the data channel should deteriorate in quality; the selection of the data channel or the broadcast channel may be performed at any time. The reception quality on the data channel may be measured in terms of an error rate, an available bandwidth, a measure of packet jitter, a measure of latency, or a combination of these.

Embodiments of the invention will now be described in more detail.

Digital Video Broadcast services in Europe usually conform to the standards set out by the DVB group and published by ETSI, which builds upon the work done by MPEG and ISO/IEC. The signalling of the services available in the broadcast channel is typically carried in the Service Description Table (SDT) and the individual components of a service (audio, video, subtitles etc) are typically signalled in the program Map Table (PMT). Specifications also exist for the delivery of DVB services over Internet Protocol (IP). XML files may be used for the description of the services that are available and the components in the service. This process is called Service Discovery and Selection (SD&S). The specifications applicable to the broadcast and data channels are conventionally separate and provide no way to bridge between them to provide receivers that are able to present both broadcast services and IP services.

IPTV operators conventionally signal the services that they are providing over IP, but they may want to be able to offer their customers a complete solution that embraces the broadcast world as well. In particular, it may be desirable to be able to include broadcast TV channels in the service line up; have the ability to provide a channel either via IP or broadcast; and have the ability to provide over IP additional or enhanced components for a broadcast service.

With prior art systems, there is no way to signal these use cases. An embodiment of the invention provides a method by which the SD&S signalling can be extended to allow IPTV providers to signal information relating to a broadcast channel.

In the case where a channel is provided over both IP and broadcast (satellite, terrestrial, cable) methods, the service provider may prefer the user to view a TV service via a broadcast channel using a tuner, typically a physical, i.e. hardware, tuner, as this reduces the bandwidth required for the IP network owned by the service provider. This may be achieved, for example, by trying both options one after the other. However, this may cause a delay between selection of the channel by the user and the first presentation of audio and video from the channel, which would be unpleasant for the user.

An embodiment of the invention provides a method for monitoring the signal quality of the available TV services from the tuner(s) and the IP service, in order to tune to the service using the most appropriate source in the shortest possible time frame. For example, there may be a scenario in which the physical tuner currently has no signal, which may be due to bad weather, a cable being loose or not being connected. Conventionally, if the user selects a service, the TV may tune using the physical tuner first. If there is no signal of sufficient quality to be viewed, the TV may waits approximately 5 seconds before determining a 'No Signal' scenario. The TV may then attempt to acquire the service via IP, and (if available), display the service to the user (which may take another second or two).

Conventionally, there may be a large delay introduced when using the physical tuner if there is no signal of sufficient quality to be viewed.

In an embodiment of the invention, the TV software maintains a recent measurement of the signal quality of every service available, so that attempting to tune using the physical tuner can be avoided. Signal quality of digital TV signals can be measured by tracking the bit-error rate from the demodulation of the channel, with lower values of bit-error rate considered to be higher quality and vice versa. A digital TV channel received using a tuner may be considered to be of sufficient quality to be viewed if the bit-error rate is below a certain threshold (meaning the signal quality is above a certain threshold). This threshold may be selected by the manufacturer of the TV receiver depending on the hardware in use.

Terminals such as TVs may have limited tuner resources (usually 1 or 2 tuners), which can be used to view and/or record TV services. It may be possible that no tuner resources are available (e.g. the user is watching a service on one tuner, and the other is used to record another service). However, whilst a tuner resource is free, it may be used to periodically scan each available multiplex and update the stored quality metric for the services provided.

The decision to use the broadband may be because there is no free tuner, eg single tuner box which is recording hence the only option is to use the data channel.

In an embodiment of the invention, when the user requests a channel change, the system first checks if the service is also being transmitted via a physical tuner. If the service is available, then the signal quality and time stamp from the last test may be queried. If the signal quality is up-to-date and indicates that the service is likely to be available (i.e. has a high signal strength), then the physical tuner is used to select the service. If the signal quality is not up-to-date (i.e. the last time it was tested is greater than a given period ago), or the signal quality is not sufficiently high for the channel to be considered viewable, then the service is started via the IP stream, and the physical tuner is used to start a new scan of the available services, starting with the currently selected service.

It is possible that in some scenarios, the IP source may be preferred over the broadcast source, for instance, where a user has explicitly requested this, or where the IP source is enhanced in some way, for example buy a high-definition version, enhanced data service, or audio language support.

The quality of the IP service received using RTP over multicast can be measured, for example, by using the following metrics: number of dropped packets per second (using RTP sequence number) or number of errors / corrected packets per second (using forward error correction stream).

However, to predict the quality of the IP service in advance (as with the scheme for broadcast services described above) may involve utilising the client's IP connection and bandwidth to 'test' each service, which may incur additional cost for use of the bandwidth to both the user and the service provider, which may not be acceptable.

Therefore, in order to provide an improved user experience, the TV may begin the process of selecting a service by first starting a connection to the IP service, and monitoring the quality. Concurrently, the broadcast tuner may be tuned to the service, but the received audio and video may not be presented to the viewer at this time. If the IP connection fails, or the quality is poor, then the TV can switch very quickly to present audio and video from the broadcast tuner. Conversely, if the IP connection provides a good quality stream with low packet loss or low error rate, then the TV can begin to present audio and video from the IP stream.

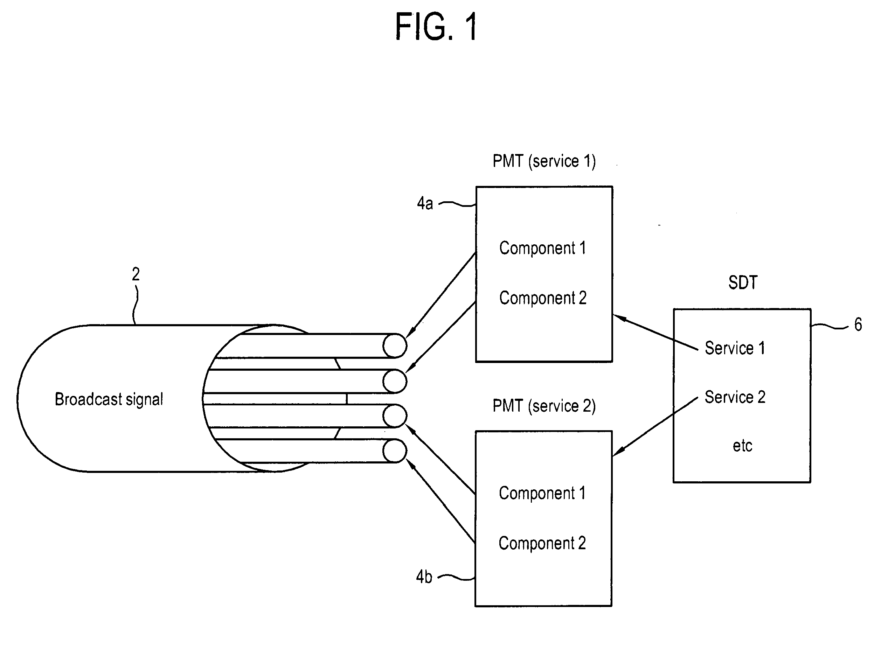

Figure 1 illustrates a way in which broadcast services, using the SDT and PMT signalling, may be limited to signalling the services 6 and service components 4a, 4b available in the broadcast signal. The broadcaster may not be able to signal any services or service components that may be carried over IP as they may not know what access the receiver has to the servers hosting the data. The DVB SD&S signalling used by IPTV providers is similarly constrained to describe the services and service components that they provide over IP. The SD&S description uses XML.

Embodiments of the invention may provide a method to provide additional signalling to include broadcast TV channels in IP service list, identify whether an IP service is a simulcast of a broadcast service, and identify whether the list of components of an IP service can be merged with the list of components of a broadcast service to provide a single service to the user.

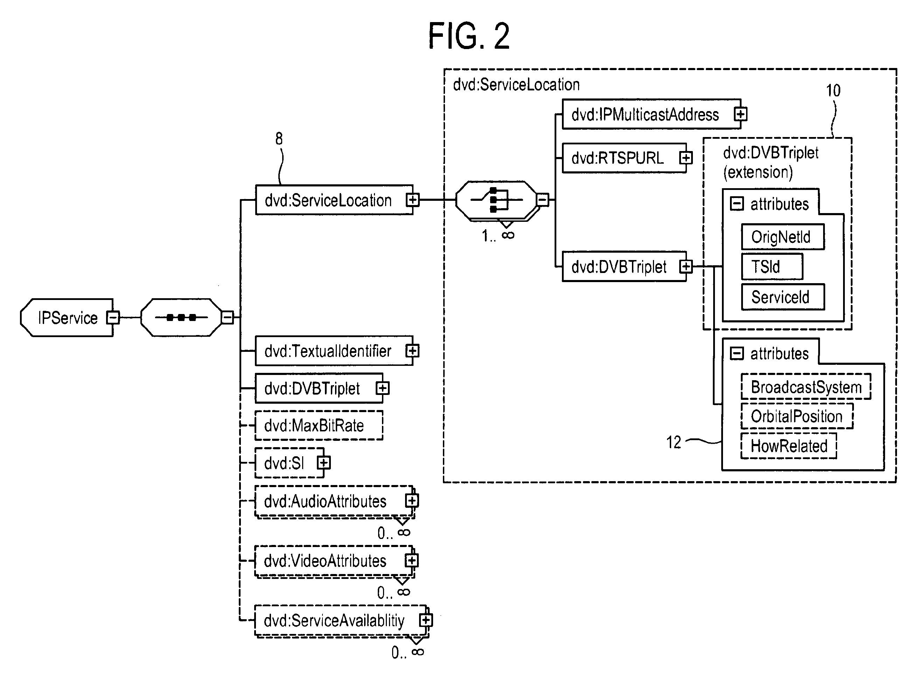

Figure 2 shows one possible implementation, showing an example of a SD&S XML Schema Extension. A new "DVBTriplet" element 10 is added to the "ServiceLocation". This element uniquely identifies a broadcast stream by the combination of its attributes: OrigNetld, TSId and Serviceld. The new "BroadcastSystem" element 12 identifies on which broadcast delivery system it can find this broadcast stream, which would be terrestrial, cable or satellite (three methods defined by DVB and delivered using DVB-T, DVB-T2, DVB-S, DVB-S2, DVB-C or DVB-C2 specifications). For satellite delivery, the receiver may also need to know the orbital position of the satellite, which is provided in the new element "OrbitalPosition". With these new elements, a receiver can identify the broadcast stream that the IPTV provider wants to reference. The final new element is "HowRelated" which indicates the relationship between the referenced broadcast stream and the IP delivered version (if one exists). This element could take values such as "simulcast", "broadcast-only" and "combine".

In embodiments of the invention, these elements may be used in the following way.

Broadcast TV channels may be included in a IP service list by including in the ServiceLocation element the DVBTriplet element, which has the attributes OrigNetld, TSId, Serviceld, BroadcastSystem and OrbitalPosition (if BroadcastSystem is satellite) with HowRelated set to "broadcast-only".

It may be identified whether an IP service is a simulcast of a broadcast service, by including in the ServiceLocation element may the DVBTriplet element, which has the attributes OrigNetls, TSId, Serviceld, BroadcastSystem and OrbitalPosition (if BroadcastSystem is satellite) with HowRelated set to "simulcast". One or both of IPMulticastAddress and RTSPURL may also be included to provide the location of the IP version of the service.

It may be identified whether the list of components of an IP service can be merged with the list of components of a broadcast service to provide a single service to the user by including in the ServiceLocation element the DVBTriplet element, which has the attributes OrigNetls, TSId, Serviceld, BroadcastSystem and OrbitalPosition (if BroadcastSystem is satellite) with HowRelated set to "combine". One or both of IPMulticastAddress and RTSPURL may also be included to provide the location of the IP version of the service with which the broadcast service can be merged. The IP service may add new audio, video, subtitle or data components, or may contain components that are duplicates of those contained in the broadcast service. Duplicate components between IP and broadcast may be identified using the DVB component tag mechanism. In the case of a duplicate component, it may be preferable to select the component delivered over IP as it may be an enhanced version with higher quality or additional features. Alternatively this choice may be provided to the viewer as a configuration option.

There may be implementations where multiple locations of the broadcast service are provided, in the case where a service is broadcast on terrestrial and also satellite for instance. This is allowed by the above XML schema, since the element type "DVBTriplet" can appear multiple times in a single ServiceLocation element. The receiving equipment can select the appropriate broadcast service based on which has been previously connected and scanned by the user, or alternatively based on a menu choice by the user.

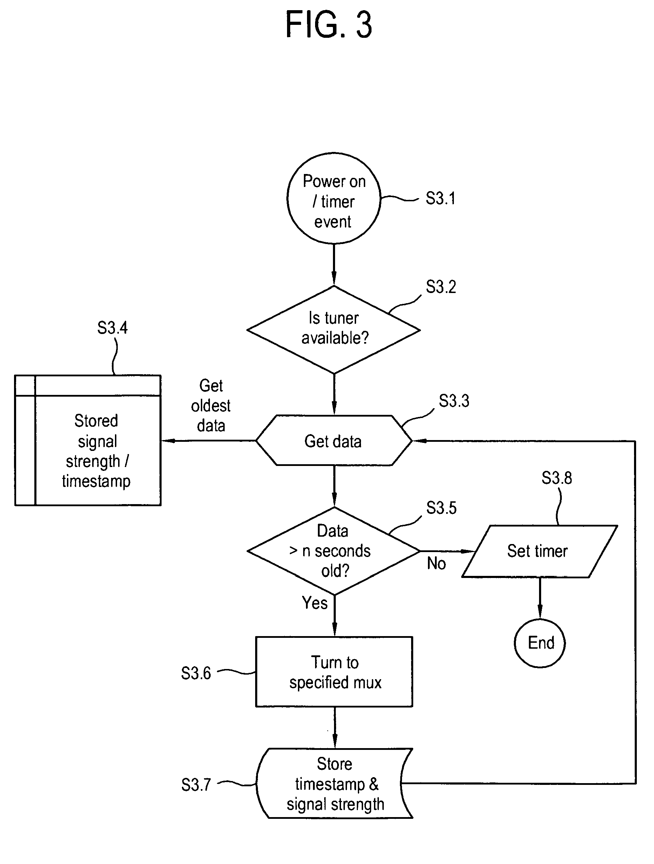

Figure 3 shows the flow for updating the stored signal strength details for each available multiplex, to allow rapid selection of the appropriate service when available from both broadcast and IP sources, as steps S3.1 to S3.8. The system starts the update procedure on power on, or a timer event at S3.1. The update procedure continues until the signal strength details for all available multiplexes have been recently stored (the age "n" when the data is considered to be out of date or stale is configurable and should be selected based on trial and error).

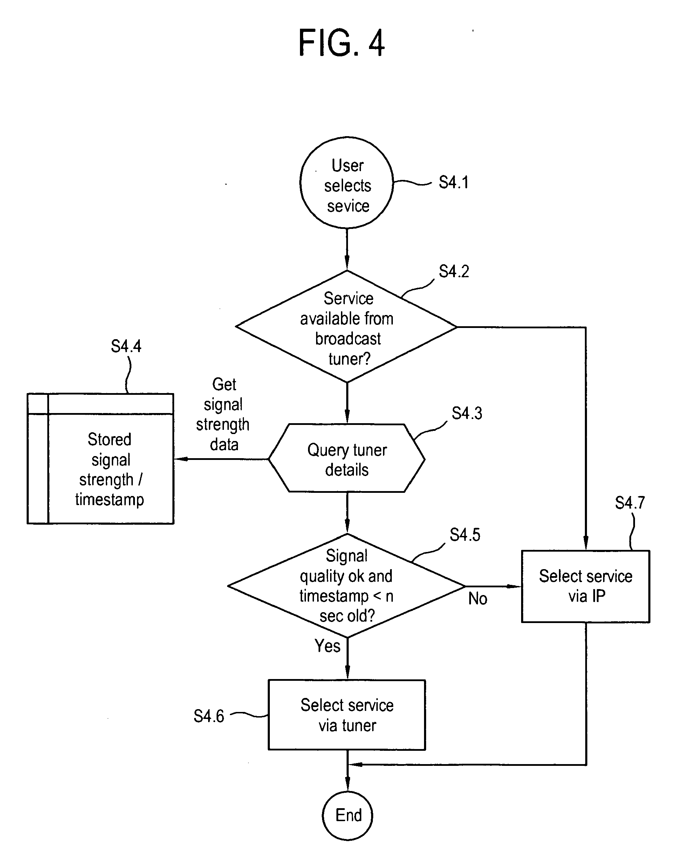

Figure 4 shows the flow when the user selects a service for viewing, and the broadcast tuner is preferred over the IP version, that is to say service selection with the broadcast tuner taking priority, as steps S4.1 to S4.7.

The above embodiments are to be understood as illustrative examples of the invention. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method of receiving a data service in a system comprising a broadcast channel and a data channel, in which said data service comprises at least one video data service and at least part of the video data service is transmitted as part of a first data stream by at least the broadcast channel, the method comprising:
receiving a second data stream using the data channel, said second data stream including first signalling information which relates a data service received on the data channel to an identifier of the first data stream transmitted using the broadcast channel, said identifier being used for signal identification in the broadcast channel;
receiving, using the data channel, second signalling information which defines how data within the first and second data streams are related to each other ; and
selecting one or both of the first data stream and the second data stream on the basis of the first and second signalling information, the method being **characterised in that** the first data stream and/or the second data stream are selectable for use in receiving the data service dependent on an indication from the second signalling information that the second data streams conveys supplementary data relating to the first data stream which identifies whether components of an IP service delivered by the data channel can be merged with components of a broadcast service from the broadcast channel.

2. A method according to claim 1, wherein the second signalling information includes an availability indicator which indicates availability of data in said data service on said broadcast channel and/or said data channel.

3. A method according to claim 1 or claim 2, wherein the availability indicator indicates whether or not the data service is only available on the broadcast channel, the method comprising:
selecting the first data stream for use in receiving the data service in dependence on the availability indicator indicating that the data service is only available on the broadcast channel.

4. A method according to claim 1,2 or 3, the method comprising:
selecting the first data stream and not the second data stream for use in receiving the data service when the second signalling information indicates that the second data stream does not convey supplementary data relating to the first data stream.

5. A method according to claim 1,2 or 3, the method comprising selecting the second data stream and not the first data stream for use in receiving the data service dependent on an indication from the second signalling information that the second data stream conveys at least part of the data service and in further dependence on a determination of reception quality of a broadcast signal.

6. A method according to claim 5, the method comprising:
selecting the second data stream for use in receiving the data service in dependence on reception quality on the broadcast channel being less than a threshold value.

7. A method according to claim 5 or claim 6, wherein the determination of reception quality of a broadcast signal is on the basis of a signal strength and/or error rate measurement of a multiplex related to the first data stream.

8. A method according to claim 7, the method comprising performing the determination of signal quality prior to receiving the second signalling information.

9. A method according to claim 7 or claim 8, wherein said selecting one or both of the first data stream and the data capable of being received using the data channel is performed in response to a change of selected data stream, the method comprising:
performing the determination of signal quality prior to the change of selected data stream.

10. A method according to claim 1, the method comprising:
measuring reception quality on the data channel; and
selecting the second data stream for use in receiving the data service in dependence on reception quality on the data channel being greater than a threshold value and in dependence on a pre-determined preference for the use of the data channel rather than the broadcast channel.

11. A method according to claim 10, the method comprising:
preparing a receiver to receive the first data stream on the broadcast channel;
monitoring reception quality on the data channel in use to receive the data service; and
switching to the use of the first data stream for use in receiving the data service in dependence on the reception quality on the data channel in use to receive the data service being less than a given value.

12. A method according to any preceding claim, wherein selecting one or both of the first data stream and the data capable of being received using the data channel for use in receiving the data service is performed at a time independent of a timing of the data service.

13. A receiver for receiving a data service in a system comprising a broadcast channel and a data channel, in which said data service comprises at least one video data service and at least part of the video data service is transmitted as part of a first data stream by at least the broadcast channel, the method comprising:
receiving a second data stream using the data channel, said second data stream including first signalling information which relates a data service received on the data channel to an identifier of the first data stream transmitted using the broadcast channel, said identifier being used for signal identification in the broadcast channel;
receiving, using the data channel, second signalling information which defines how data within the first and second data streams are related to each other; and
selecting one or both of the first data stream and the second data stream on the basis of the first and second signalling information, the method being **characterised in that** the first data stream and/or the second data stream are selectable for use in receiving the data service dependent on an indication from the second signalling information that the second data streams conveys supplementary data relating to the first data stream which identifies whether components of an IP service delivered by the data channel can be merged with components of a broadcast service from the broadcast channel.

## Patentansprüche

1. Verfahren zum Empfangen eines Datendienstes in einem System, das einen Rundsendekanal und einen Datenkanal umfasst, wobei der Datendienst mindestens einen Video-Datendienst umfasst und mindestens ein Teil des Video-Datendienstes als Teil eines ersten Datenstroms durch mindestens den Rundsendekanal gesendet wird, wobei das Verfahren Folgendes umfasst:
Empfangen eines zweiten Datenstroms unter Verwendung des Datenkanals, wobei der zweite Datenstrom erste Zeichengabeinformationen enthält, die einen auf dem Datenkanal empfangenen Datendienst zu einem unter Verwendung des Rundsendekanals gesendeten Identifikator des ersten Datenstroms in Beziehung setzen, wobei der Identifikator zur Signalidentifizierung in dem Rundsendekanal verwendet wird;
Empfangen, unter Verwendung des Datenkanals, von zweiten Zeichengabeinformationen, die definieren, wie Daten innerhalb des ersten und des zweiten Datenstroms zueinander in Beziehung stehen; und
Auswählen des ersten Datenstroms oder des zweiten Datenstroms oder beider Datenströme auf der Grundlage der ersten und der zweiten Zeichengabeinformationen, wobei das Verfahren **dadurch gekennzeichnet ist, dass** der erste Datenstrom und/oder der zweite Datenstrom zur Verwendung beim Empfangen des Datendienstes in Abhängigkeit von einem Hinweis aus den zweiten Zeichengabeinformationen ausgewählt werden können, dass der zweite Datenstrom Ergänzungsdaten transportiert, die zu dem ersten Datenstrom in Beziehung stehen und die identifizieren, ob Komponenten eines IP-Service, die durch den Datenkanal übermittelt werden, mit Komponenten eines Rundsendedienstes aus dem Rundsendekanal verschmolzen werden können.

2. Verfahren nach Anspruch 1, wobei die zweiten Zeichengabeinformationen einen Verfügbarkeitsindikator enthalten, der die Verfügbarkeit von Daten in dem Datendienst auf dem Rundsendekanal und/oder dem Datenkanal anzeigt.

3. Verfahren nach Anspruch 1 oder Anspruch 2, wobei der Verfügbarkeitsindikator anzeigt, ob der Datendienst nur auf dem Rundsendekanal verfügbar ist oder nicht, wobei das Verfahren Folgendes umfasst:
Auswählen des ersten Datenstroms zur Verwendung beim Empfangen des Datendienstes in Abhängigkeit davon, dass der Verfügbarkeitsindikator anzeigt, dass der Datendienst nur auf dem Rundsendekanal verfügbar ist.

4. Verfahren nach Anspruch 1, 2 oder 3, wobei das Verfahren Folgendes umfasst:
Auswählen des ersten Datenstroms und nicht des zweiten Datenstroms zur Verwendung beim Empfangen des Datendienstes, wenn die zweiten Zeichengabeinformationen anzeigen, dass der zweite Datenstrom keine Ergänzungsdaten transportiert, die zu dem ersten Datenstrom in Beziehung stehen.

5. Verfahren nach Anspruch 1, 2 oder 3, wobei das Verfahren Folgendes umfasst: Auswählen des zweiten Datenstroms und nicht des ersten Datenstroms zur Verwendung beim Empfangen des Datendienstes in Abhängigkeit von einem Hinweis aus den zweiten Zeichengabeinformationen, dass der zweite Datenstrom mindestens einen Teil des Datendienstes transportiert, und des Weiteren in Abhängigkeit von der Ermittlung der Empfangsqualität eines Rundsendesignals.

6. Verfahren nach Anspruch 5, wobei das Verfahren Folgendes umfasst:
Auswählen des zweiten Datenstroms zur Verwendung beim Empfangen des Datendienstes in Abhängigkeit davon, dass die Empfangsqualität auf dem Rundsendekanal schlechter als ein Schwellenwert ist.

7. Verfahren nach Anspruch 5 oder Anspruch 6, wobei die Ermittlung der Empfangsqualität eines Rundsendesignals auf der Grundlage einer Signalstärke- und/oder Fehlerratenmessung eines mit dem ersten Datenstrom in Beziehung stehenden Multiplex stattfindet.

8. Verfahren nach Anspruch 7, wobei das Verfahren das Ausführen der Ermittlung der Signalqualität vor dem Empfangen der zweiten Zeichengabeinformationen umfasst.

9. Verfahren nach Anspruch 7 oder Anspruch 8, wobei das Auswählen des ersten Datenstroms und/oder der Daten, die unter Verwendung des Datenkanals empfangen werden können, als Reaktion auf einen Wechsel des ausgewählten Datenstroms ausgeführt wird, wobei das Verfahren Folgendes umfasst:
Ausführen der Ermittlung der Signalqualität vor dem Wechsel des ausgewählten Datenstroms.

10. Verfahren nach Anspruch 1, wobei das Verfahren Folgendes umfasst:
Messen der Empfangsqualität auf dem Datenkanal; und
Auswählen des zweiten Datenstroms zur Verwendung beim Empfangen des Datendienstes in Abhängigkeit davon, dass die Empfangsqualität auf dem Datenkanal besser als ein Schwellenwert ist, und in Abhängigkeit von einer zuvor festgelegten Präferenz für die Verwendung des Datenkanals anstelle des Rundsendekanals.

11. Verfahren nach Anspruch 10, wobei das Verfahren Folgendes umfasst:
Vorbereiten eines Empfängers auf den Empfang des ersten Datenstroms auf dem Rundsendekanal;
Überwachen der Empfangsqualität auf dem Datenkanal während der Verwendung zum Empfangen des Datendienstes; und
Umschalten zur Verwendung des ersten Datenstroms zur Verwendung beim Empfangen des Datendienstes in Abhängigkeit davon, dass die Empfangsqualität auf dem Datenkanal während der Verwendung zum Empfangen des Datendienstes schlechter als ein bestimmter Wert ist.

12. Verfahren nach einem der vorangehenden Ansprüche, wobei das Auswählen des ersten Datenstroms und/oder der Daten, die unter Verwendung des Datenkanals zur Verwendung beim Empfangen des Datendienstes empfangen werden können, zu einer Zeit ausgeführt wird, die vom Zeitpunkt des Datendienstes unabhängig ist.

13. Empfänger zum Empfangen eines Datendienstes in einem System, das einen Rundsendekanal und einen Datenkanal umfasst, wobei der Datendienst mindestens einen Video-Datendienst umfasst und mindestens ein Teil des Video-Datendienstes als Teil eines ersten Datenstroms durch mindestens den Rundsendekanal gesendet wird, wobei das Verfahren Folgendes umfasst:
Empfangen eines zweiten Datenstroms unter Verwendung des Datenkanals, wobei der zweite Datenstrom erste Zeichengabeinformationen enthält, die einen auf dem Datenkanal empfangenen Datendienst zu einem unter Verwendung des Rundsendekanals gesendeten Identifikator des ersten Datenstroms in Beziehung setzen, wobei der Identifikator zur Signalidentifizierung in dem Rundsendekanal verwendet wird;
Empfangen, unter Verwendung des Datenkanals, von zweiten Zeichengabeinformationen, die definieren, wie Daten innerhalb des ersten und des zweiten Datenstroms zueinander in Beziehung stehen; und
Auswählen des ersten Datenstroms oder des zweiten Datenstroms oder beider Datenströme auf der Grundlage der ersten und der zweiten Zeichengabeinformationen, wobei das Verfahren **dadurch gekennzeichnet ist, dass** der erste Datenstrom und/oder der zweite Datenstrom zur Verwendung beim Empfangen des Datendienstes in Abhängigkeit von einem Hinweis aus den zweiten Zeichengabeinformationen ausgewählt werden können, dass der zweite Datenstrom Ergänzungsdaten transportiert, die zu dem ersten Datenstrom in Beziehung stehen und die identifizieren, ob Komponenten eines IP-Service, die durch den Datenkanal übermittelt werden, mit Komponenten eines Rundsendedienstes aus dem Rundsendekanal verschmolzen werden können.

## Revendications

1. Procédé de réception d'un service de données dans un système comprenant un canal de diffusion et un canal de données, dans lequel ledit service de données comprend au moins un service de données vidéo, et au moins une partie du service de données vidéo est transmise en tant que partie d'un premier flux de données par au moins le canal de diffusion, le procédé comprenant :
la réception d'un second flux de données en utilisant le canal de données, ledit second flux de données comprenant des premières informations de signalisation qui lient un service de données reçu sur le canal de données à un identifiant du premier flux de données transmis en utilisant le canal de diffusion, ledit identifiant étant utilisé pour l'identification de signal dans le canal de diffusion ;
la réception, en utilisant le canal de données, de secondes informations de signalisation qui définissent la façon dont des données contenues dans les premier et
second flux de données sont liées les unes aux autres ; et
la sélection de l'un du premier flux de données et du second flux de données ou des deux sur la base des premières et secondes informations de signalisation, le procédé étant **caractérisé en ce que** le premier flux de données et/ou le second flux de données peuvent être sélectionnés pour une utilisation lors de la réception du service de données d'une façon qui dépend d'une indication provenant des secondes informations de signalisation, selon laquelle le second flux de données achemine des données supplémentaires liées au premier flux de données, qui identifient si des composantes d'un service IP fourni par le canal de données peuvent être fusionnées avec des composantes d'un service de diffusion provenant du canal de diffusion.

2. Procédé selon la revendication 1, dans lequel les secondes informations de signalisation comprennent un indicateur de disponibilité qui indique la disponibilité de données dans ledit service de données sur ledit canal de diffusion et/ou ledit canal de données.

3. Procédé selon la revendication 1 ou la revendication 2, dans lequel l'indicateur de disponibilité indique si oui ou non le service de données n'est disponible que sur le canal de diffusion, le procédé comprenant :
la sélection du premier flux de données pour une utilisation lors de la réception du service de données d'une façon qui dépend du fait que l'indicateur de disponibilité indique que le service de données n'est disponible que sur le canal de diffusion.

4. Procédé selon la revendication 1, 2 ou 3, le procédé comprenant :
la sélection du premier flux de données et non pas du second flux de données pour une utilisation lors de la réception du service de données lorsque les secondes informations de signalisation indiquent que le second flux de données n'achemine pas de données supplémentaires liées au premier flux de données.

5. Procédé selon la revendication 1, 2 ou 3, le procédé comprenant la sélection du second flux de données et non pas du premier flux de données pour une utilisation lors de la réception du service de données d'une façon qui dépend d'une indication provenant des secondes informations de signalisation, selon laquelle le second flux de données achemine au moins une partie du service de données et d'une façon qui dépend en outre d'une détermination de la qualité de réception d'un signal de diffusion.

6. Procédé selon la revendication 5, le procédé comprenant :
la sélection du second flux de données pour une utilisation lors de la réception du service de données d'une façon qui dépend du fait que la qualité de réception sur le canal de diffusion est inférieure à une valeur de seuil.

7. Procédé selon la revendication 5 ou la revendication 6, dans lequel la détermination de la qualité de réception d'un signal de diffusion s'effectue sur la base d'une mesure de l'intensité et/ou du taux d'erreurs du signal d'un multiplex lié au premier flux de données.

8. Procédé selon la revendication 7, le procédé comprenant le fait d'effectuer une détermination de la qualité du signal avant la réception des secondes informations de signalisation.

9. Procédé selon la revendication 7 ou la revendication 8, dans lequel ladite sélection de l'un du premier flux de données et des données pouvant être reçues ou des deux en utilisant le canal de données est effectuée en réponse à une modification du flux de données sélectionné, le procédé comprenant :
le fait d'effectuer la détermination de la qualité du signal avant la modification du flux de données sélectionné.

10. Procédé selon la revendication 1, le procédé comprenant :
la mesure de la qualité de réception sur le canal de données ; et
la sélection du second flux de données pour une utilisation lors de la réception du service de données d'une façon qui dépend du fait que la qualité de réception sur le canal de diffusion est supérieure à une valeur de seuil et d'une façon qui dépend d'une préférence prédéterminée pour l'utilisation du canal de données plutôt que du canal de diffusion.

11. Procédé selon la revendication 10, le procédé comprenant :
la préparation d'un récepteur à la réception du premier flux de données sur le canal de diffusion ;
la surveillance de la qualité de réception sur le canal de données lors de l'utilisation pour recevoir le service de données ; et
le passage à l'utilisation du premier flux de données pour une utilisation lors de la réception du service de données d'une façon qui dépend du fait que la qualité de réception sur le canal de données lors de l'utilisation pour recevoir le service de données est inférieure à une valeur donnée.

12. Procédé selon l'une quelconque des revendications précédentes, dans lequel la sélection de l'un du premier flux de données et des données pouvant être reçues ou des deux en utilisant le canal de données pour une utilisation lors de la réception du service de données est effectuée à un moment indépendant d'instants du service de données.

13. Récepteur destiné à recevoir un service de données dans un système comprenant un canal de diffusion et un canal de données, dans lequel ledit service de données comprend au moins un service de données vidéo, et au moins une partie du service de données vidéo est transmise en tant que partie d'un premier flux de données par au moins le canal de diffusion, le procédé comprenant :
la réception d'un second flux de données en utilisant le canal de données, ledit second flux de données comprenant des premières informations de signalisation qui lient un service de données reçu sur le canal de données à un identifiant du premier flux de données transmis en utilisant le canal de diffusion, ledit identifiant étant utilisé pour l'identification du signal dans le canal de diffusion ;
la réception, en utilisant le canal de données, de secondes informations de signalisation qui définissent la façon dont des données contenues dans les premier et second flux de données sont liées les unes aux autres ; et
la sélection de l'un du premier flux de données et du second flux de données ou des deux sur la base des premières et secondes informations de signalisation, le procédé étant **caractérisé en ce que** le premier flux de données et/ou le second flux de données peuvent être sélectionnés pour une utilisation lors de la réception du service de données d'une façon qui dépend d'une indication provenant des secondes informations de signalisation, selon laquelle le second flux de données achemine des données supplémentaires liées au premier flux de données, qui identifient si des composantes d'un service IP fourni par le canal de données peuvent être fusionnées avec des composantes d'un service de diffusion provenant du canal de diffusion.
